# EUROPÄISCHE PATENTSCHRIFT

(11) **EP 3 645 248 B1**
(45) Veröffentlichungstag und Bekanntmachung des Hinweises auf die Patenterteilung: **29.11.2023**
(21) Anmeldenummer: 18732117.9
(22) Anmeldetag: 26.06.2018
(51) Int. Cl.: B29C 64/393, B29C 64/153, B22F 3/105

(54) **AUTOMATISIERTE KALIBRIERUNG EINER VORRICHTUNG ZUR VOLLPARALLELISIERTEN ADDITIVEN FERTIGUNG EINES BAUTEILS MIT KOMBINIERTEN ARBEITSFELDERN**
AUTOMATED CALIBRATING OF A DEVICE FOR FULLY PARALLEL ADDITIVE PRODUCTION OF A COMPONENT WITH COMBINED WORK AREAS
ÉTALONNAGE AUTOMATISÉ D'UN DISPOSITIF DESTINÉ À LA FABRICATION ADDITIVE ENTIÈREMENT PARALLÉLISÉE D'UN COMPOSANT À CHAMPS D'ACTION COMBINÉ

(30) Priorität: 26.06.2017 DE 102017114147; 10.01.2018 EP 18150935
(43) Veröffentlichungstag der Anmeldung: 06.05.2020
(60) Teilanmeldung: 23204441.2
(73) Patentinhaber: Raylase GmbH, 82234 Wessling (DE)
(72) Erfinder: LEHMANN, Wolfgang, 82110 Germering (DE)
(74) Vertreter: Lucke, Andreas
(86) Internationale Anmeldenummer: PCT/EP2018/067008
(87) Internationale Veröffentlichungsnummer: WO 2019/002232

(56) Entgegenhaltungen:
- EP-A2- 2 186 625
- WO-A1-2017/085470

## Beschreibung

### GEBIET DER ERFINDUNG

Die vorliegende Erfindung betrifft eine Anordnung und ein Verfahren zur pulverbett-basierten additiven Fertigung eines Bauteils, und insbesondere die Kalibrierung und Synchronisierung mehrerer Laservorrichtungen zur parallelen Herstellung des Bauteils mit kombinierten Arbeitsfeldern.

### STAND DER TECHNIK

Additive Fertigungsverfahren, bei denen ein Werkstoff zur Erzeugung eines Bauteils schichtweise hinzugefügt und thermisch verarbeitet wird, gewinnen in der industriellen Produktion mehr und mehr an Bedeutung gegenüber den klassischen subtraktiven Fertigungsverfahren wie Fräsen, Bohren und Drehen, bei denen Material abgetragen wird, um ein Bauteil herzustellen. Die schichtbasierte Bauweise, die kennzeichnend für additive Fertigungsverfahren ist, ermöglicht die Herstellung hochkomplexer geometrischer Strukturen mit einem hohen Maß an Gestaltungsraum, das subtraktive Verfahren nicht erreichen können.

Die Zunahme in der industriellen Bedeutung der additiven Fertigungsverfahren wird von der steigenden Effizienz der Laserquellen vorangetrieben, die zur thermischen Bearbeitung eines Werkstoffes verwendet werden. Dementsprechend erfährt der Markt zurzeit einen Übergang von einer ursprünglichen Verwendung additiver Fertigungsverfahren lediglich zur Herstellung von Prototypen ("Rapid Prototyping") zu einem massenhaften industriellen Einsatz dieser Technologie für die Reihenproduktion ("Rapid Manufacturing"). Diese Entwicklung zeigt sich in zahlreichen Wirtschaftszweigen, wie beispielsweise der Luft-und Raumfahrtindustrie, der Automobilindustrie, der Medizintechnik und der Prothetik.

Eine besondere Art der additiven Fertigung stellen pulverbett-basierte Prozesse dar, bei denen ein pulverisiertes Ausgangsmaterial schichtweise auf das herzustellende Bauteil aufgetragen und durch Laserlicht aufgeschmolzen wird. Die Pulverschichten weisen typischerweise Dicken im Mikrometerbereich auf.

Eine wesentliche Rolle bei der Steigerung der Effizienz von Anordnungen zur pulverbett-basierten additiven Fertigung von Bauteilen spielt die Möglichkeit der Parallelverarbeitung eines Bauteils durch mehrere Laservorrichtungen, durch die höhere Ausstoßraten erreicht werden können. Der kombinierte Einsatz mehrerer Laservorrichtungen zur gleichzeitigen Herstellung eines Bauteils erfordert unbedingt eine genaue Kalibrierung der einzelnen Laservorrichtungen und eine Synchronisierung der Laservorrichtungen miteinander. Dies ist jedoch mit Schwierigkeiten verbunden, für die es noch keine Lösung gibt. Gängige Kalibrierungssysteme für Anordnungen zur additiven Fertigung eines Bauteils basieren auf der Justierung einzelner Galvanometer-Scanner (sogenannter Galvo-Motoren) der Laservorrichtungen und können temperaturbedingte Ungenauigkeiten der gesamten Anordnung nicht kollektiv berücksichtigen.

Somit besteht bei der additiven Fertigung von Bauteilen Verbesserungsbedarf im Hinblick auf die Kalibrierung und Synchronisierung mehrerer parallel arbeitender Laservorrichtungen.

Aus der WO 2017/085470 A1 sind mehrere Methoden zum Kalibrieren eines optischen Moduls bekannt, bei denen nicht-kalibrierte optische Module durch Vergleich mit einem vorkalibrierten optischen Modul und/oder unter Verwendung eines Kalibrierungsmusters kalibriert werden. Ein Kalibrierungsmusters kann von einem einzigen bereits kalibrierten optischen Modul erzeugt werden.

Die EP 2 186 625 A2 beschreibt ein Kalibrierungsverfahren, bei dem ein Kalibrierungsmuster von einer ersten Vorrichtung und/oder von einer zweiten Vorrichtung erzeugt wird. Das jeweilige Kalibrierungsmuster wird von einer Kamera erfasst und einer Kalibrierung der zugehörigen Vorrichtung zu Grunde gelegt. Die beiden Vorrichtunten werden unabhängig voneinander kalibriert.

### DARSTELLUNG DER ERFINDUNG

Der vorliegenden Erfindung liegt die Aufgabe zu Grunde, die Kalibrierung, Re-Kalibrierung und Synchronisierung einer oder mehrerer an der pulverbett-basierten additiven Fertigung eines Bauteils parallel beteiligten Laservorrichtungen zu gestatten. Hierbei ist mit "parallel" insbesondere ein vollparallelisiertes Fertigungsverfahren gemeint, bei dem mehrere an der Fertigung beteiligte Laservorrichtungen die Herstellung des Bauteils durch gleichzeitige Bearbeitung eines gemeinsamen Baufeldes zusammenwirkend bewerkstelligen. Diese Aufgabe wird durch eine Anordnung nach Anspruch 1, ein Verfahren nach Anspruch 12, ein Computerprogrammprodukt nach Anspruch 18 und ein computerlesbares Speichermedium nach Anspruch 19 gelöst. Bevorzugte Ausführungsformen und Weiterbildungen der Erfindung sind in den abhängigen Ansprüchen angegeben.

Die vorliegende Erfindung betrifft eine Anordnung zur pulverbett-basierten additiven Fertigung eines Bauteils. Die Anordnung umfasst ein Gehäuse, das ein Bauvolumen umfasst, wobei das Bauvolumen ein Baufeld umfasst. Das Baufeld ist eine 2-dimensionale Querschnittsebene des Bauvolumens und deckt eine Oberfläche des Gehäuses ab, auf der das Bauteil durch sukzessiven Pulverbettauftragungen und daran anschließende thermische Verarbeitung schichtweise erzeugt werden kann. Das Baufeld entspricht typischerweise einer vertikalen Projektion des 3-dimensionalen Bauvolumens. Dies bedeutet zum Beispiel, dass bei einem zylinderförmigen Bauvolumen, das Baufeld einer kreisförmigen Querschnittsebene entsprechen kann, und bei einem würfelförmigen Bauvolumen das Baufeld einer quadratischen Querschnittsebene entsprechen kann, wobei beliebige Formen des Bauvolumens möglich sind. Das Bauvolumen kann beispielsweise einem gesonderten Volumenunterabschnitt des Innenraums des Gehäuses entsprechen, und das Baufeld kann einem entsprechen Flächenabschnitt einer unteren Oberfläche des Gehäuses abdecken, der eine 2-dimensionale Projektion des Bauvolumens auf die untere Oberfläche des Gehäuses darstellt. Das Baufeld kann ebenfalls eine bewegliche Oberfläche abdecken, auf der eine oberste Pulverbettschicht des Ausgangsmaterials aufliegt. Die bewegliche Oberfläche kann in diesem Fall nach der Laserverarbeitung einer jeden Pulverbettschicht entlang einer Richtung derart verschoben werden, dass ein Abstand zwischen dem Baufeld bzw. der obersten Pulverbettschicht des zu bearbeitenden Ausgangsmaterials und den Laservorrichtungen konstant bleibt.

Man beachte jedoch, dass es sich sowohl bei dem Bauvolumen als auch bei dem Baufeld um virtuelle geometrische Konstrukte handeln kann, die einen bestimmten räumlichen Bereich der Anordnung abdecken können aber keine körperliche Natur besitzen müssen. Zwar kann sich das Baufeld beispielsweise über einen gesonderten Flächenabschnitt des Gehäuses der Anordnung erstrecken, muss jedoch nicht unbedingt mit diesem gesonderten Flächenabschnitt identifiziert werden. Entsprechendes gilt für das Bauvolumen.

Das Bauvolumen kann durch das Gehäuse von einer Umgebung isoliert werden, wodurch störende Wechselwirkungen der Umgebung mit dem Bauvolumen vermieden werden können, um die Erhaltung der für die additive Fertigung des Bauteils im Bauvolumen erforderlichen physikalischen Bedingungen wie beispielsweise Druck, Temperatur, Luftfeuchtigkeit, Reinheit der Atmosphäre usw. zu gewährleisten. Das Gehäuse kann jedoch eine optische Wechselwirkung mit dem Bauvolumen von Außerhalb des Gehäuses ermöglichen, beispielsweise durch einen lichtdurchlässigen Abschnitt des Gehäuses. Ein lichtdurchlässiger Abschnitt des Gehäuses kann mit dem Bauvolumen bzw. dem Baufeld räumlich übereinstimmen, um. die visuelle Beobachtung und optische Beobachtung des Fertigungsverfahrens im Bauvolumen sowie eine optische Einwirkung auf das Bauvolumen von außerhalb des Gehäuses zu ermöglichen.

Die Anordnung umfasst ferner mindestens zwei, vorzugsweise mindestens drei Markervorrichtungen, die in oder an dem Gehäuse befestigt sind, wobei jede Markervorrichtung dazu geeignet ist, eine Lichtreferenzmarkierung auf ein auf dem Baufeld liegendes Bauteil und/oder auf das Baufeld zu projizieren. Die Markervorrichtungen sind vorzugsweise an dem Gehäuse derart befestigt, dass die Markervorrichtungen thermodynamisch bedingten Verformungen mindestens eines Teils des Gehäuses folgen können. Die Markervorrichtungen können innerhalb oder außerhalb des Gehäuses angeordnet sein. Wenn sie außerhalb des Gehäuses angeordnet sind, sind die Markervorrichtungen allerdings derart angeordnet, dass sie optischen Kontakt mit dem Baufeld und dem Bauteil herstellen können, beispielsweise durch einen lichtdurchlässigen Teil des Gehäuses.

Durch die Befestigung der Markervorrichtungen in oder an dem Gehäuse kann erreicht werden, dass sich unkontrollierte thermomechanische Verformungen des Gehäuses oder Dehnungen eines Teils hiervon, gleichermaßen auf das Bauvolumen und auf die Position der Lichtreferenzmarkierungen auswirken. Solche Verformungen und Dehnungen können sich zum Beispiel im Laufe des Fertigungsprozesses infolge von Temperaturänderungen im Bauvolumen ergeben. Auf diese Weise kann das Problem vermieden oder abgemildert werden, dass die Positionierung der Lichtreferenzmarkierungen auf dem Baufeld bzw. auf dem Bauteil von den vorgenannten Effekten unkontrolliert beeinflusst werden. Stattdessen bewegen sich die Markervorrichtungen im Falle von Dehnungen oder Verformungen des Gehäuses zumindest teilweise mit dem Gehäuse mit, sodass die relativen Positionen der von den Markervorrichtungen projizierten Lichtreferenzmarkierungen in Bezug auf das Bauvolumen und/oder auf das Baufeld beibehalten werden können.

Die Markervorrichtungen weisen eine sehr hohe Zeigestabilität auf, so dass neben dem erwähnten gewünschten "Mitdriften" mit dem Gehäuse infolge thermodynamisch bedingter Verformungen oder Dehnungen kein weiterer Drift auf die Markervorrichtungen einwirkt.

Es versteht sich, dass die Lichtreferenzmarkierungen direkt auf das Baufeld projiziert werden, wenn kein Bauteil in dem Bauvolumen enthalten ist bzw. hergestellt wird. Liegt ein Bauteil auf dem Baufeld, sei es ein fertig hergestelltes Bauteil oder ein Bauteil das gerade hergestellt wird, können die Lichtreferenzmarkierungen sowohl auf das Bauteil, d.h. auf eine oberste - möglicherweise noch zu verarbeitende - Pulverschicht des Bauteils, als auch auf Bereiche des Baufeldes, die von dem Bauteil nicht abgeschirmt werden, projiziert werden. Zudem bietet dies den Vorteil, dass die Position der Lichtreferenzmarkierungen unabhängig von dem Entwicklungsstand des Bauteils während der Fertigung ist, da die Lichtreferenzmarkierungen immer auf eine oberste Pulverschicht des Bauteils projiziert werden können.

Die Anordnung umfasst ferner eine Laservorrichtung zur Laserverarbeitung eines Pulverbetts zur Erzeugung eines Bauteils auf dem Baufeld mittels additiver Fertigung. Die Laservorrichtung ist zur Laserbearbeitung eines zugehörigen Arbeitsfeldes eingerichtet.

Die Laservorrichtung kann über dem Gehäuse angeordnet und dazu eingerichtet sein, durch einen lichtdurchlässigen Teil des Gehäuses mit dem Bauvolumen bzw. dem Baufeld und oder mit einem im Bauvolumen liegenden Bauteil optisch wechselzuwirken. Diese optische Wechselwirkung kann sowohl der Laserbearbeitung eines Pulvermaterials zum Zwecke der additiven Fertigung des Bauteils als auch der Kalibrierung der Anordnung dienen.

Hierin wird unter "Laservorrichtung" eine Vorrichtung verstanden, die zur Laserbearbeitung des zur Herstellung des Bauteils verwendeten Pulvers im Rahmen der additiven Fertigung geeignet ist. Insbesondere kann eine Laservorrichtung eine Ablenkeinheit, auch Ablenkkopf genannt, umfassen, die es ermöglicht, das gesamte Bauvolumen zu scannen, und die das punktgenaue lasergesteuerte Aufschmelzen des zur Herstellung des Bauteils verwendeten Pulvers steuern kann. Für die hierin beschriebene Anordnung eignen sich insbesondere die Ablenkeinheiten, die Gegenstand der Patentanmeldung DE 10 2016 120 523 sind, als Teil der Laservorrichtungen, wobei die Offenbarung hierauf nicht beschränkt ist, da die Verwendung anderer Laservorrichtungen bzw. anderer Ablenkeinheiten ebenfalls möglich ist.

Ferner umfasst die Laservorrichtung eine Detektionseinrichtung, die dazu eingerichtet ist, die Lichtreferenzmarkierungen zu erfassen. Die Erfassung der Lichtreferenzmarkierungen von der Detektionseinrichtung kann durch optische Detektion des von dem Baufeld bzw. von dem Bauteil reflektierten Lichts der Lichtreferenzmarkierungen erfolgen. Diese Detektion kann eine mechanisch gesteuerte Anpassung der Komponenten der Laservorrichtung, wie beispielsweise Spiegel, Linsen, Galvanometer, Ablenkeinheiten, oder anderer optischer und/oder elektronischer Elemente, umfassen. Die Lichtreferenzmarkierungen können dabei vollständig erfasst werden. Alternativ können die Lichtreferenzmarkierungen aber auch teilweise erfasst werden, sodass lediglich ausgewählte Bereiche oder Teile einer oder mehrerer der Lichtreferenzmarkierungen erfasst werden. Beide Varianten werden durch den Begriff "Erfassen der Lichtreferenzmarkierungen" abgedeckt.

Die Erkennung der Lichtreferenzmarkierungen durch die Detektionseinrichtung und eine anschließende Justierung der Laservorrichtung auf die Lichtreferenzmarkierungen kann durch eine geeignete Software gesteuert werden. Die interne Struktur und die Funktionsweise einer Laservorrichtung, einschließlich der vorgenannten Software, sind aus dem Stand der Technik bekannt und werden hierin nicht im Detail beschrieben. Stattdessen wird für weitere Details auf die vorgenannte Patentanmeldung DE 10 2016 120 523 verwiesen.

Die Anordnung umfasst ferner eine Steuereinheit, die dazu eingerichtet ist, basierend auf den von der Detektionseinrichtung erfassten Lichtreferenzmarkierungen die Laservorrichtung zu kalibrieren. Zu diesem Zweck kann die Steuereinheit einen Prozessor umfassen, auf dem eine hierzu geeignete Software ausgeführt werden kann, und einen Speicher, in dem die Software gespeichert ist. Anhand dieser Kalibrierung, die auf den von den Markervorrichtungen erzeugten Lichtreferenzmarkierungen basiert, ermöglicht die erfindungsgemäße Anordnung einen präzisen Betrieb der Laservorrichtung zur Herstellung des Bauteils im Rahmen der additiven Fertigung.

Betriebsbedingte Temperaturschwankungen der Laservorrichtungen können die Genauigkeit der Laservorrichtungen in Form eines Offset-Drifts und/oder eines Gain-Drifts beeinträchtigen. Diese können verursachen, dass ein von einer Laservorrichtung bzw. dem Prozessor einer Laservorrichtung bestimmter Punkt in Bezug auf das Bauvolumen "wandert" bzw. sich ändert, so dass der Punkt des Bauvolumens, der von der Laservorrichtung tatsächlich getroffen wird, wenn ein bestimmter Punkt anvisiert wird, sich im Laufe der Zeit ändert. Durch die Kalibrierung wird die Laservorrichtung darauf eingestellt, einen gewünschten, anvisierten Punkt des Bauvolumens zum Zwecke der Laserbearbeitung tatsächlich zu treffen. Insbesondere können durch die Kalibrierung die Effekte eines Offset-Drifts und/oder eines Gain-Drifts kompensiert bzw. korrigiert werden.

Die erfindungsgemäße Anordnung gestattet eine Kalibrierung der Laservorrichtung, bei der negative Effekte von betriebsbedingten Ungenauigkeitsquellen auf die Präzision der Anordnung berücksichtigt werden können. Dies ermöglicht eine erhöhte Positionsgenauigkeit der Laserbearbeitung des Bauteils durch die Laservorrichtung in der Anordnung, die sich letztendlich in einer erhöhten Qualität des gefertigten Bauteils widerspiegelt.

Gemäß einer bevorzugten Ausführungsform sind mindestens drei der Markervorrichtungen dazu geeignet, jeweils eine linienförmige Lichtreferenzmarkierung zu projizieren, wobei die linienförmigen Lichtreferenzmarkierungen sich paarweise an mindestens drei zugehörigen Kreuzungspunkten kreuzen. Die Detektionseinrichtung ist dazu eingerichtet, die mindestens drei Kreuzungspunkte zu erfassen, und die Steuereinheit ist ferner dazu eingerichtet, die Laservorrichtung (30) basierend auf den mindestens drei von der Detektionseinrichtung erfassten Kreuzungspunkten zu kalibrieren. Die Verwendung von Kreuzungspunkten zur Kalibrierung, an denen sich linienförmige Lichtreferenzmarkierungen kreuzen, ermöglicht ein besseren Driftverhaltens und eine bessere Abbildungsschärfe.

In einer bevorzugten Ausführungsform umfasst die Anordnung eine Mehrzahl von Laservorrichtungen. Jede Laservorrichtung ist zur Laserbearbeitung eines zugehörigen Arbeitsfeldes eingerichtet. Die Arbeitsfelder der jeweiligen Laservorrichtungen decken eine gemeinsame Überlappungsfläche ab. Diese gemeinsame Überlappungsfläche kann dem Baufeld entsprechen, d.h. kann deckungsgleich mit dem Baufeld sein. Dies kann beispielsweise der Fall sein, wenn die Arbeitsfelder der einzelnen Laservorrichtungen eine gemeinsame quadratische Überlappungsfläche abdecken und das Baufeld ein quadratisches Baufeld ist. Die gemeinsame Überlappungsfläche kann jedoch das Baufeld umfassen ohne mit diesem deckungsgleich zu sein. Dies kann beispielsweise der Fall sein, wenn die Arbeitsfelder der einzelnen Laservorrichtungen eine gemeinsame quadratische Überlappungsfläche abdecken, das Baufeld aber ein kreisförmiges Baufeld ist.

Jede der Laservorrichtungen kann ein eigenes Arbeitsfeld abdecken bzw. bearbeiten, das sich zumindest teilweise mit den Arbeitsfeldern der restlichen Laservorrichtungen überlappt. Die Mehrzahl von Laservorrichtungen sind zur gleichzeitigen parallelen Laserbearbeitung dieser gemeinsamen Überlappungsfläche, die dem Baufeld entspricht oder das Baufeld umfasst, eingerichtet. Die Laservorrichtungen können über dem Gehäuse angeordnet und dazu eingerichtet sein, durch einen lichtdurchlässigen Teil des Gehäuses mit dem Bauvolumen bzw. dem Baufeld und oder mit einem im Bauvolumen liegenden Bauteil optisch wechselzuwirken. Diese optische Wechselwirkung kann sowohl der Laserbearbeitung eines Pulvermaterials zum Zwecke der additiven Fertigung des Bauteils als auch der Kalibrierung und Synchronisierung der Anordnung dienen.

Die Steuereinheit ist dann ferner dazu eingerichtet ist, basierend auf den von den Detektionseinrichtungen erfassten Lichtreferenzmarkierungen und/oder Kreuzungspunkten die Mehrzahl von Laservorrichtungen zu kalibrieren und/oder verschiedene Laservorrichtungen miteinander zu synchronisieren. Anhand dieser Synchronisierung, die auf den von den Markervorrichtungen erzeugten Lichtreferenzmarkierungen und/oder Kreuzungspunkten basiert, ermöglicht die erfindungsgemäße Anordnung einen präzisen gleichzeitigen parallelen Betrieb der Mehrzahl von Laservorrichtungen zur parallelen Herstellung des Bauteils im Rahmen der additiven Fertigung. Dadurch wird eine verbesserte Synchronisierung der Laservorrichtungen miteinander erzielt.

In einer bevorzugten Ausführungsform umfasst die Anordnung ferner ein Deckelement, das dazu geeignet ist, das Gehäuse abzudecken wobei die mindestens drei Markervorrichtungen vorzugsweise in oder an dem Deckelelement befestigt sind. "Abdecken" kann hierbei auf die Herstellung einer fluiddichten Verbindung zwischen dem Deckelelement und dem Gehäuse hinweisen, mit der störende mechanische oder chemische Wechselwirkungen der Umgebung mit dem Bauvolumen vermieden werden können, um die Erhaltung der für die additiven Fertigung des Bauteils im Bauvolumen erforderlichen physikalischen oder chemischen Bedingungen zu gewährleisten. Nichtsdestotrotz ermöglicht das Deckelelement eine optische Wechselwirkung mit dem Bauvolumen von Außerhalb des Gehäuses. Insbesondere kann das Deckelelement gänzlich oder teilweise lichtdurchlässig sein, um die visuelle Beobachtung und optische Überwachung des Fertigungsverfahrens sowie eine optische Einwirkung auf das Bauvolumen von außerhalb des Gehäuses zu ermöglichen. Das Deckelelement kann beispielsweise ein Glasfenster umfassen, welches mit dem Baufeld räumlich übereinstimmt und mithin das ganze Bauvolumen überdeckt.

Gemäß einer bevorzugten Ausführungsform sind die mindestens drei Markervorrichtungen außerhalb des Gehäuses angeordnet. Die Markervorrichtungen sind dann durch das Gehäuse oder durch das Deckelelement von dem Innenraum des Gehäuses bzw. dem Bauvolumen getrennt. Dadurch kann der Betrieb der Markervorrichtungen stabilisiert werden. Gleichzeitig folgen die Markervorrichtungen, die gleichwohl am Deckelelement befestigt sind, temperaturbedingten Verformungen des Deckelelements, die erwartungsgemäß ähnlich sind wie die Verformungen, die sich für das Bauvolumen ergeben.

In einer bevorzugten Ausführungsform umfasst die Mehrzahl von Laservorrichtungen mindestens vier Laservorrichtungen, die dazu geeignet sind, das gesamte Baufeld zur Herstellung des Bauteils parallel zu bearbeiten. Die Anzahl der Markervorrichtungen kann dementsprechend ebenfalls mindestens vier sein, wobei die Anzahl der Markervorrichtungen nicht unbedingt mit der Anzahl der Laservorrichtungen übereinstimmen muss. Die Anzahl der Markervorrichtungen beträgt zwei oder mehr, vorzugsweise drei oder mehr. Man beachte, dass andere Konfigurationen mit einer beliebigen ersten Anzahl von Laservorrichtungen und einer beliebigen zweiten Anzahl von Markervorrichtungen ebenfalls möglich ist.

Gemäß einer bevorzugten Ausführungsform weist das Baufeld eine oder mehrere Referenzmarkierungen auf, und die Detektionseinrichtung mindestens einer der Laservorrichtungen ist ferner dazu eingerichtet, die eine oder die mehreren Referenzmarkierungen zu erfassen. Die Referenzmarkierungen können Markierungen jeglicher Art sein, beispielsweise geätzte oder chromatisierte Strukturen, aber auch optisch erzeugte Markierungen. Die Referenzmarkierungen können beispielsweise Markierungen sein, die auf einer mit dem Baufeld übereinstimmenden Oberfläche des Gehäuses durch Ätzen, Chromatierung oder dergleichen ausgebildet sind.

Die Erfassung der Referenzmarkierungen durch die Detektionseinrichtung mindestens einer der Laservorrichtungen kann durch den gleichen Mechanismus erfolgen, der für die Erfassung der Lichtreferenzmarkierungen wie oben ausgeführt verwendet wird. Insbesondere können für die Erfassung der Referenzmarkierungen die gleichen Komponenten der Erfassungseinrichtung verwendet werden wie für die Erfassung der Lichtreferenzmarkierungen.

Die Referenzmarkierungen ermöglichen eine Justierung der Markervorrichtungen auf das Baufeld. Die Markervorrichtungen können beispielsweise derart justiert werden, dass die zugehörige Lichtreferenzmarkierung eine vorbestimmte räumliche Beziehung zu einer oder mehreren der Referenzmarkierungen annimmt. Insbesondere können die Markervorrichtungen so justiert werden, dass eine oder mehrere der Lichtreferenzmarkierungen mit einer bzw. mehreren der Referenzmarkierungen in Deckung gebracht wird bzw. werden. Diese Justierung kann beispielsweise im Rahmen einer Grundjustierung vor der Herstellung des Bauteils stattfinden. Demnach werden die Markervorrichtungen vor Auftragung der ersten Pulverschicht anhand der Referenzvorrichtungen auf das Baufeld justiert. Nach Auftragung der sukzessiven Pulverschichten auf das Bauteil im Bauvolumen bleibt die genaue Positionierung der Referenzmarkierungen und mithin des Baufeldes durch die projizierten Lichtreferenzmarkierungen nachvollziehbar. Die eben beschriebene Grundeinstellung kann zu späteren Zeitpunkten zur erneuten Justierung der Anordnung wiederholt werden.

Des Weiteren können die Laservorrichtungen anhand der Referenzmarkierungen auf das Baufeld justiert werden, wodurch die Laservorrichtungen die genaue Positionierung und das Ausmaß des Baufeldes erfassen können und gegebenenfalls die Einstellung ihrer optischen, mechanischen und oder elektromagnetischen Komponenten entsprechend anpassen. Die Justierung der Laservorrichtungen auf das Baufeld kann beispielsweise Einstellungen bezüglich einer Fokussierung, eines Strahlwinkels oder einer Strahlintensität umfassen
In einer bevorzugten Ausführungsform umfasst die Anordnung ferner eine abnehmbare Referenzmarkierplatte, die im oder auf dem Baufeld angeordnet werden kann und die eine oder die mehreren Referenzmarkierungen umfasst. Die Referenzmarkierplatte kann dazu geeignet sein, in den Innenraum des Gehäuses, beispielsweise auf eine untere Oberfläche des Gehäuses, aufgebracht zu werden. Die Referenzmarkierplatte ist vorzugsweise deckungsgleich mit dem Baufeld. Im Falle eines kreisförmigen Baufeldes kann die Referenzmarkierplatte beispielsweise eine scheibenförmige Platte sein. Die Referenzmarkierungen können Markierungen jeglicher Art sein, beispielsweise auf der Referenzmarkierplatte geätzte oder chromatisierte Strukturen, aber auch optisch erzeugte Markierungen.

Gemäß einem Aspekt der Erfindung umfassen mindestens drei der Markervorrichtungen eine Laserlichtquelle, die dazu eingerichtet ist, eine zugehörige Lichtreferenzmarkierung als punktförmige oder kreuzförmige Lichtreferenzmarkierung zu erzeugen.

Gemäß einem Aspekt der Erfindung umfassen mindestens drei der Markervorrichtungen eine Laserlichtquelle, die dazu eingerichtet ist, eine zugehörige Lichtreferenzmarkierung als Laserlinie zu erzeugen, wobei sich die mindestens drei Laserlinien paarweise an insgesamt mindestens drei zugehörigen Kreuzungspunkten kreuzen. Beispielsweise können drei Markervorrichtungen drei Laserlinien erzeugen, die sich paarweise an drei zugehörigen Kreuzungspunkten kreuzen und ein Lasermarkierungs-Dreieck auf ein auf dem Baufeld liegendes Bauteil und/oder auf das Baufeld projizieren. Jeder Eckpunkt des Lasermarkierungs-Dreiecks entspricht einem Kreuzungspunkt zweier der Laserlinien. Auf ähnliche Weise können vier Markervorrichtungen beispielsweise vier Laserlinien erzeugen, die sich paarweise an vier zugehörigen Kreuzungspunkten kreuzen und ein Lasermarkierungs-Viereck bilden, wobei jeder Eckpunkt des Lasermarkierungs-Vierecks einem Kreuzungspunkt zweier der Laserlinien entspricht. Die vier von den Markervorrichtungen projizierten Laserlinien können insbesondere paarweise senkrecht bzw. parallel zueinander stehen, sodass das projizierte Lasermarkierungs-Viereck ein Rechteck oder ein Quadrat ist. Die Detektionseinrichtung und die Steuereinheit können dann derart eingerichtet sein, dass die Kreuzungspunkte der Lichtreferenzmarkierungen der Kalibrierung und/oder der Synchronisierung zu Grunde gelegt werden können.

Alternativ oder zusätzlich ist mindestens eine Markervorrichtung dazu eingerichtet, Licht zur Erzeugung der Lichtreferenzmarkierung zu erzeugen, das eine oder mehrere Wellenlängen zwischen 405 nm und 850 nm, vorzugweise zwischen 490 nm und 640 nm, besonders bevorzugt zwischen 490 nm und 540 nm hat.

Gemäß einer weiteren bevorzugten Ausführungsform sind eine oder mehrere der Markervorrichtungen dazu eingerichtet, die zugehörige Lichtreferenzmarkierung auf eine Außenrandlinie des Baufeldes zu projizieren, oder in einem Abstand von der Außenrandlinie, der 10 % des Durchmessers des Baufeldes nicht übersteigt. Dies erweist sich als besonders vorteilhaft, wenn das Baufeld die Form eines Rechtecks aufweist, da die Lichtreferenzmarkierungen dann nicht nur die Positionierung des Baufeldes festlegen können, sondern auch seine genauen Maße und Außenränder. Im Falle eines kreisförmigen Baufeldes liegen die Lichtreferenzmarkierungen vorzugsweise innerhalb des Baufeldes.

In einer bevorzugten Ausführungsform umfasst mindestens eine der Laservorrichtungen eine Laserlichtquelle, die dazu eingerichtet ist, Laserlicht zur Laserverarbeitung eines Bauteils zu erzeugen, sowie eine Ablenkeinheit, die dazu eingerichtet ist, Licht abzulenken und zu scannen. Ferner umfasst die mindestens eine der Laservorrichtungen ein wellenlängenselektives optisches Element, das zwischen der Ablenkeinheit und der Laserlichtquelle angeordnet ist, und das für eine oder mehrere Wellenlängen des Laserlichts zumindest teilweise reflektierend ist und für eine oder mehrere Wellenlängen der Lichtreferenzmarkierungen zumindest teilweise durchlässig ist. Eine umgekehrte Konfiguration, in der das wellenlängenselektive optische Element für eine oder mehrere Wellenlängen des Laserlichts zumindest teilweise durchlässig ist und für eine oder mehrere Wellenlängen der Lichtreferenzmarkierungen zumindest teilweise reflektierend ist, ist je nach Position der Laserlichtquelle und der Detektionseinrichtung, ebenfalls möglich. Das wellenlängenselektive optische Element ist ferner dazu eingerichtet, das Licht der Lichtreferenzmarkierungen auszukoppeln und auf die Detektionseinrichtung zu richten.

Die Ablenkeinheit kann beispielsweise einen ersten Scannspiegel und einen zweiten Scannspiegel umfassen, wobei der erste Scannspiegel, dazu eingerichtet ist, Licht in eine erste Richtung abzulenken und zu scannen, und der zweite Scannspiegel dazu eingerichtet ist, Licht in eine zweite Richtung abzulenken und zu scannen, wobei die erste Richtung senkrecht zur zweiten Richtung steht. Die Detektionseinrichtung der Laservorrichtung ist dann auf einem Lichtpfad, dem in die Laservorrichtung eingetretenes Licht folgt, nach dem ersten Scannspiegel, dem zweiten Scannspiegel, d.h. nach der Ablenkeinheit, und dem optischen Element angeordnet. Man beachte, dass dieser Teil des Lichtpfades zumindest teilweise mit dem Lichtpfad übereinstimmen kann, den das zur Laserverarbeitung verwendete Licht - in umgekehrter Richtung - nimmt.

Licht, das in die Laservorrichtung eintritt, wird in manchen Ausführungsformen von der Ablenkeinheit in Richtung des optischen Elements abgelenkt. Das auf das wellenlängenselektive optische Element tretende Licht wird von diesem ganz oder teilweise in Richtung auf die Detektionseinrichtung zur Erfassung transmittiert bzw. reflektiert. Von der Laserlichtquelle erzeugtes Licht zur Laserverarbeitung des Bauteils wird von dem wellenlängenselektiven optischen Element hingegen reflektiert und auf das Bauvolumen gerichtet, sodass sich an dieser Stelle der Lichtpfad für das Laserlicht und der Lichtpfad für die Detektion der Licht Referenzmarkierungen und/oder der Lichtreferenzmarkierungen trennt.

Selbstverständlich ist es ebenso möglich, ein wellenselektives optisches Element zu verwenden, welches das Laserlicht durchlässt und das von der Detektionseinrichtung zu erfassende Licht reflektiert. Zudem kann das wellenlängenselektive optische Element ein Teil des auf das optische Element tretenden Lichts in eine andere Richtung als die Richtung der Detektionseinrichtung ablenken, sodass dieser Teil des Lichts in der Laservorrichtung zu anderen Zwecken erfasst werden kann. Die Detektionseinrichtung kann beispielsweise eine monochromatische Kamera mit einem Objektiv umfassen, das für die Erfassung der Lichtreferenzmarkierungen und/oder der Referenzmarkierungen besonders konfiguriert ist. Die Detektionseinrichtung kann ferner eine Autofokussierlinse umfassen, um eine schärfere Erfassung der Lichtreferenzmarkierungen und/oder der Referenzmarkierungen durch die Kamera zu ermöglichen.

Die vorliegende Erfindung betrifft außerdem ein Verfahren zum Kalibrieren und/oder zum Synchronisieren der Laservorrichtung bzw. der Mehrzahl von Laservorrichtungen einer Anordnung zur pulverbett-basierten additiven Fertigung eines Bauteils gemäß einer der oben ausgeführten Ausführungsformen. Das Verfahren umfasst das Erfassen mindestens dreier Lichtreferenzmarkierungen mit der Laservorrichtung bzw. einer jeden der Laservorrichtungen. Ferner umfasst das Verfahren das Kalibrieren der Laservorrichtung bzw. der einzelnen Laservorrichtungen und/oder das Synchronisieren der Mehrzahl von Laservorrichtungen miteinander basierend auf den erfassten Lichtreferenzmarkierungen. Das Verfahren kann somit das Kalibrieren mindestens einer Laservorrichtung, das Synchronisieren einer Mehrzahl von Laservorrichtungen miteinander oder beides umfassen, wobei das Kalibrieren bzw. das Synchronisieren auf den erfassten Lichtreferenzmarkierungen basiert.

Gemäß einer bevorzugten Ausführungsform sind mindestens drei der Lichtreferenzmarkierungen linienförmig, wobei die linienförmigen Lichtreferenzmarkierungen sich paarweise an mindestens drei zugehörigen Kreuzungspunkten kreuzen. Das Erfassen der Lichtreferenzmarkierungen umfasst in solchen Ausführungsformen das Erfassen der mindestens drei Kreuzungspunkte. Das Erfassen der Lichtreferenzmarkierungen kann aber auch in solchen Ausführungsformen darin bestehen, die mindestens drei Kreuzungspunkte zu erfassen. Das Kalibrieren der Laservorrichtung bzw. der einzelnen Laservorrichtungen und/oder das Synchronisieren der Mehrzahl von Laservorrichtungen miteinander basiert auf den mindestens drei erfassten Kreuzungspunkten.

In einer bevorzugten Ausführungsform umfasst mindestens eine der Laservorrichtungen eine Ablenkeinheit, mit der ein von der zugehörigen Laservorrichtung erzeugter Laserstrahl zum Abscannen des Bauvolumens abgelenkt werden kann, und die Kalibrierung umfasst die Korrektur eines Offsets und/oder die Kompensation eines Gain-Drifts der Ablenkeinheit. Der Fachmann versteht unter dem "Offset der Ablenkeinheit" eine Konstante Differenz zwischen dem tatsächlichen Ablenkwinkel und einem beabsichtigten Ablenkwinkel einer oder mehrerer Ablenkeinheiten, wobei der Ablenkwinkel einer Ablenkeinheit deren Strahlrichtung bestimmt. Der Offset entsteht durch eine Abweichung des Referenznullpunkts der Galvanometer bezüglich des tatsächlichen Mittelpunkts des Ablenkwinkelbereiches einer Ablenkeinheit. Der Begriff "Gain-Drift" betrifft eine Abweichung zwischen einer beabsichtigten Änderung des Ablenkwinkels und der tatsächlich bewirkten Änderung des Ablenkwinkels. Diese Abweichung kann ebenfalls als Veränderung der Größe des Baufeldes durch eine Vergrößerung oder Verkleinerung des Ablenkwinkelbereichs einer oder mehrerer Ablenkeinheiten verstanden werden.

Gemäß einer bevorzugten Ausführungsform umfasst das Verfahren ferner einen Schritt, in dem eine jede der Markervorrichtungen derart justiert wird, dass die zugehörige Lichtreferenzmarkierung eine vorbestimmte räumliche Beziehung zu einer oder mehreren der Referenzmarkierungen annimmt, insbesondere mit einer der Referenzmarkierungen in Deckung gebracht wird.

In einer bevorzugten Ausführungsform basiert die Kalibrierung mindestens einer der Laservorrichtungen auf einer Auswahl unter den Lichtreferenzmarkierungen und/oder den Kreuzungspunkten, in der Lichtreferenzmarkierungen und/oder. Kreuzungspunkte bevorzugt sind, die weiter von einem Mittelpunkt des Arbeitsfeldes der zugehörigen Laservorrichtung entfernt sind. Demnach werden der Kalibrierung vorzugsweise Lichtreferenzmarkierungen bzw. Kreuzungspunkte zu Grunde gelegt, die einen größeren Abstand zu dem Mittelpunkt des Arbeitsfeldes der zugehörigen Laservorrichtung aufweisen als eine dieser Mittelpunkt nächstliegende Lichtreferenzmarkierung bzw. Kreuzungspunkt.

In einer weiteren bevorzugten Ausführungsform wird das Kalibrieren der einzelnen Laservorrichtungen und/oder Synchronisieren der Mehrzahl von Laservorrichtungen im Laufe der additiven Fertigung wiederholt. Die Wiederholung findet vorzugsweise in regelmäßigen Intervallen statt. Somit kann eine kontinuierliche Anpassung der Laservorrichtungen vorgenommen werden, die sich im Laufe des Betriebs der Anordnung zur Herstellung des Bauteils ändernden Bedingungen Rechnung trägt. Die Wiederholungen des Kalibrierens bzw. Synchronisierens können nach jeder Auftragung einer neuen Pulverschicht auf das Bauteil stattfinden. Dies gestattet eine kontinuierliche Anpassung oder Optimierung der Arbeitseinstellungen der Laservorrichtungen auf den aktuellen Abstand zwischen dem Bauteil und den jeweiligen Laservorrichtungen.

Ein weiterer Aspekt der vorliegenden Erfindung betrifft ein Computerprogrammprodukt, das Befehle umfasst, die bei der Ausführung des Programms durch einen Prozessor, der mit einer Anordnung nach einem der hierin beschriebenen Ausführungsformen assoziiert ist, diese veranlassen, ein erfindungsgemäßes Verfahren nach einem der oben erläuterten Ausführungsformen auszuführen.

Ein weiterer Aspekt der vorliegenden Erfindung betrifft ein computerlesbares Speichermedium, das ein solches Computerprogrammprodukt speichert.

### KURZBESCHREIBUNG DER FIGUREN

- Fig. 1: zeigt eine Anordnung zur pulverbett-basierten additiven Fertigung eines gemäß einer Ausführungsform der Erfindung.
- Fig. 2: zeigt eine Anordnung gemäß einer anderen Ausführungsform der Erfindung.
- Fig. 3: zeigt eine schematische Struktur der Komponenten einer Laservorrichtung einer Anordnung gemäß einer Ausführungsform der Erfindung.
- Fig. 4: zeigt eine schematische Darstellung der Arbeitsfelder von vier Laservorrichtungen einer Anordnung gemäß einer Ausführungsform der Erfindung.
- Fig. 5: illustriert eine beispielhafte räumliche Verteilung von kreuzförmigen Lichtreferenzmarkierungen bzw. der Referenzmarkierungen auf dem Baufeld gemäß einer Ausführungsform der Erfindung.
- Fig. 6: illustriert eine beispielhafte räumliche Verteilung von linienförmigen Lichtreferenzmarkierungen gemäß einer Ausführungsform der Erfindung.
- Fig. 7: zeigt ein Flussdiagramm eines Verfahrens zum Kalibrieren und Synchronisieren der Mehrzahl von Laservorrichtungen einer Anordnung gemäß einer Ausführungsform der Erfindung.

### BESCHREIBUNG BEVORZUGTER AUSFÜHRUNGSFORMEN

Weitere Vorteile und Merkmale der Erfindung ergeben sich aus der folgenden Beschreibung, in der die Erfindung anhand verschiedener Ausführungsbeispiele unter Bezugnahme auf die beigefügten Zeichnungen beschrieben wird.

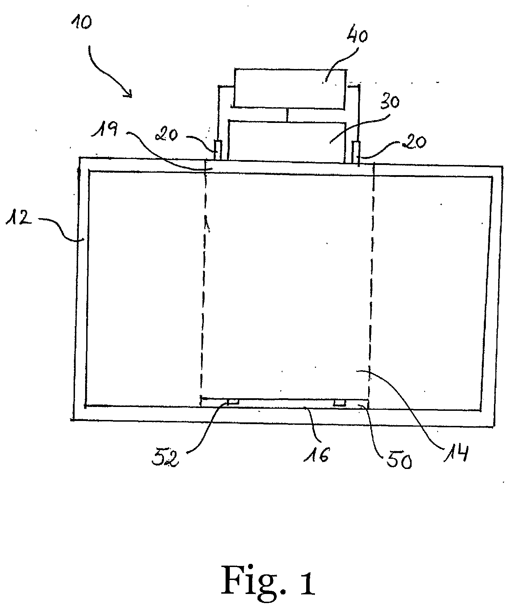

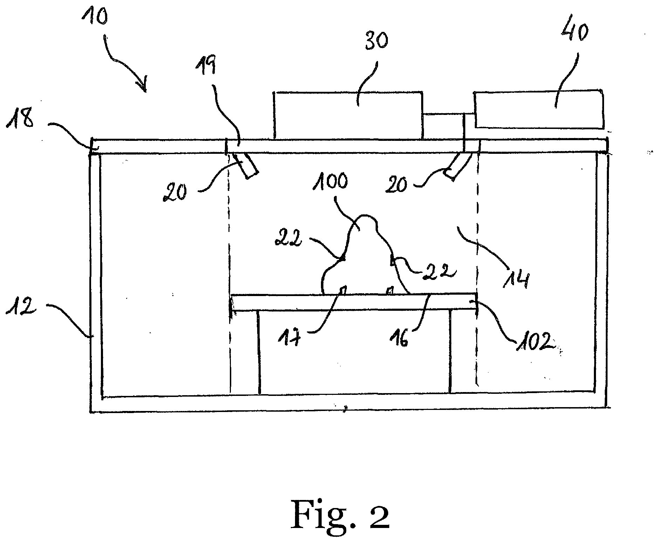

Die Fig. 1 zeigt eine Anordnung 10 zur pulverbett-basierten additiven Fertigung eines Bauteils (vgl. Fig. 2) gemäß einer Ausführungsform der Erfindung. Die Anordnung 10 umfasst ein Gehäuse 12, ein Bauvolumen 14, ein Baufeld 16, vier Markervorrichtungen 20, vier Laservorrichtungen 30, eine Steuereinheit 40 und eine abnehmbare Referenzmarkierplatte 50.

Das Baufeld 16 ist eine 2-dimensionale Querschnittsebene des Bauvolumens 14, die einen Abschnitt einer inneren Bodenoberfläche des Gehäuses 12 abdeckt. Wie in der Figur 1 gezeigt, entspricht das Baufeld 16 einer vertikalen Projektion des Bauvolumens 14 auf die vorgenannte Bodenoberfläche des Gehäuses 12. Das Bauvolumen 14 entspricht einem Volumenunterabschnitt des Innenraums des Gehäuses 12, der in der Figur mit gestrichelten Linien markiert ist.

Die vier Markervorrichtungen 20 sind an dem Gehäuse 12 befestigt, sodass sie thermodynamisch bedingten Verformungen des Gehäuses 12 folgen können. Jede der Markervorrichtungen 20 ist dazu geeignet, eine Lichtreferenzmarkierung auf das Baufeld 16 oder auf ein auf dem Baufeld 16 liegendes Bauteil zu projizieren. Die Markervorrichtungen 20 sind auf einer Oberseite des Gehäuses 12 außerhalb des Gehäuses angeordnet.

Die vier Laservorrichtungen 30 sind über dem Gehäuse 12 angeordnet und sind dazu geeignet, das gesamte Baufeld 16 zur Herstellung eines Bauteils durch additive Fertigung parallel zu bearbeiten. Das Gehäuse 12 weist einen lichtdurchlässigen Abschnitt 19, der mit dem Bauvolumen 14 räumlich übereinstimmt und über dem Baufeld 16 liegt. Sowohl die Laservorrichtungen 30 als auch die Markervorrichtungen 20 sind in optischem Kontakt mit dem Bauvolumen 14 bzw. dem Baufeld 16 durch den lichtdurchlässigen Abschnitt 19 des Gehäuses 12.

Die Referenzmarkierplatte 50 ist in der gezeigten Ausführungsform eine Glasplatte, die auf der inneren Bodenfläche des Gehäuses 12 liegt und deckungsgleich mit dem Baufeld 16 ist. Die Referenzmarkierplatte 50 weist vier Referenzmarkierungen 52 auf, die auf eine obere Fläche der Referenzmarkierplatte 50 geätzt sind. Die Referenzmarkierungen 52 liegen auf dem Baufeld 16 und können als Referenzmarkierungen des Baufeldes 16 angesehen werden.

Die Steuereinheit 40 ist mit den Laservorrichtungen 30 und den Markiervorrichtungen 20 funktionell verbunden und ist dazu eingerichtet, die Laservorrichtungen 30 zu kalibrieren und miteinander zu synchronisieren.

Die Fig. 2 zeigt eine Anordnung 10 zur pulverbett-basierten additiven Fertigung eines Bauteils 100 gemäß einer anderen Ausführungsform der Erfindung. Elemente der Anordnung 10, die in der Fig. 1 dargestellten Ausführungsform ebenfalls vorhanden sind, sind mit den gleichen Bezugszeichen gekennzeichnet wie in der Fig. 1. Die Elemente, die in dieser Ausführungsform die gleiche Funktion erfüllen wie in der in Bezug auf die Fig. 1 bereits beschriebenen Ausführungsform, werden nicht wiederholt erläutert. In der angezeigten Ausführungsform wird das Bauteil 100 auf einem entlang einer vertikalen Richtung verschiebbaren beweglichen Halteelement 102 ausgebildet, das nach jeder Auftragung einer Pulvermaterialschicht nach unten fahren kann, so dass der Abstand zwischen der obersten Schicht des Pulvermaterials und den Laservorrichtungen konstant bleibt.

Die Anordnung 10 der Fig. 2 unterscheidet sich von jener der Fig. 1 ferner dadurch, dass sie ein Deckelelement 18 umfasst, welches das Gehäuse 12 abdeckt und eine obere Seite bzw. obere Außenwand des Gehäuses 12 bildet. Das Deckelelement 18 weist einen lichtdurchlässigen Abschnitt 19 auf, der dem lichtdurchlässigen Abschnitt 19 des Gehäuses der Fig. 1 entspricht. Die Laservorrichtungen 30 sind durch den lichtdurchlässigen Abschnitt 19 des Deckelelements 18 mit dem Bauvolumen 16 bzw. dem Bauteil 100 in optischem Kontakt.

Ferner sind die Markervorrichtungen 20 in dieser Ausführungsform an dem Deckelelement 18 innerhalb des Gehäuses 12 befestigt. Die Figur zeigt zudem ein Bauteil 100, das in dem Bauvolumen 14 hergestellt wird. Jede der Markervorrichtungen 20 projiziert eine Lichtreferenzmarkierung 22 auf das Bauteil 100. In der gezeigten Ausführungsform sind die Markervorrichtungen 20 dazu eingerichtet, Licht zur Erzeugung der Lichtreferenzmarkierungen 22 zu erzeugen, das Wellenlängen im Bereich zwischen 490 nm und 540 nm aufweist. Das Baufeld 16 weist Referenzmarkierungen 17, die auf einer Bodenfläche des Gehäuses 12 chromatisiert sind und in der dargestellten Situation von dem Bauteil 100 abgedeckt sind.

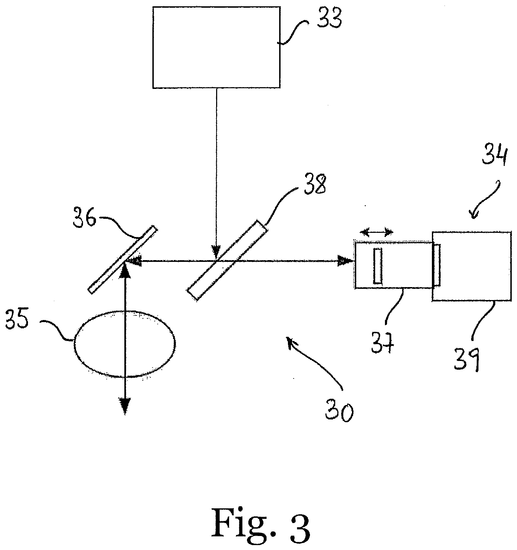

Die Fig. 3 zeigt eine schematische Darstellung mancher der Komponenten einer der Laservorrichtungen 30 einer Anordnung gemäß einer Ausführungsform der Erfindung. Die Laservorrichtung 30 umfasst eine Ablenkeinheit mit einem ersten Scannspiegel 35 und einem zweiten Scannspiegel 36, sowie ein wellenlängenselektives optisches Element 38 und eine Detektionseinrichtung 34. Die Laservorrichtung 30 umfasst ferner eine Laserlichtquelle 33 zur Erzeugung des Laserlichts, das zur Laserverarbeitung des Bauteils verwendet wird. Das wellenlängenselektive optische Element 38 ist auf dem Lichtpfad, dem das von der Laserlichtquelle 33 erzeugte Laserlicht und/oder das von der Detektionseinrichtung 34 zu erfassende Licht folgt, zwischen der Ablenkeinheit, d.h. den Scannspiegeln 35 und 36, und der Laserlichtquelle 33 angeordnet.

Licht, insbesondere Licht, das von dem Baufeld 16 einer Anordnung oder von einem in einer Anordnung entstehenden Bauteil 100 reflektiert wird, kann in die Laservorrichtung 30 eintreten. Die Ablenkeinheit ist dazu eingerichtet, Licht abzulenken und zu scannen. Zu diesem Zweck ist der erste Scannspiegel 35 dazu eingerichtet, Licht in eine erste Richtung abzulenken und zu scannen, und der zweite Scannspiegel 36 ist dazu eingerichtet, Licht in eine zweite Richtung abzulenken und zu scannen, wobei die erste Richtung und die zweite Richtung senkrecht zueinander stehen. Die Scannspiegel 35 und 36 der Ablenkeinheit sind dazu eingerichtet, in die Laservorrichtung 30 eingetretenes Licht in Richtung der Detektionseinrichtung 34 durch das optische Element 38 zu reflektieren. Das wellenlängenselektive optische Element 38 ist dazu eingerichtet, für einen Wellenlängenbereich des von den Scannspiegeln 35 und 36 reflektierten Lichts der Lichtreferenzmarkierungen 22, das von dem Bauvolumen kommend in die Laservorrichtung 30 eintritt, durchlässig zu sein, so dass dieses Licht in Richtung auf die Detektionseinrichtung 34 transmittiert wird und von dieser erfasst wird. Dieser Wellenlängenbereich des auf die Detektionseinrichtung 34 gerichteten Lichts ist auf die Detektionseinstellungen der Detektionseinrichtung 34 optimiert. Wie in der Figur 3 gezeigt, ist die Detektionseinrichtung 34 entlang des von dem in die Laservorrichtung 30 eintretenden Licht gefolgten Lichtpfades nach dem ersten Scannspiegel 35, dem zweiten Scannspiegel 36 und dem optischen Element 38 angeordnet.

Das wellenlängenselektive optische Element 38 ist ferner für Laserlicht, das von der Laserlichtquelle 33 der Laservorrichtung 30 zur Laserverarbeitung eines Bauteils erzeugt wird, reflektierend, sodass das Laserlicht, das von der Laserlichtquelle 33 erzeugt wird, von dem ersten Scannspiegel 35 und dem zweiten Scannspiegel 36 in Richtung auf das Bauvolumen reflektiert wird.

Die Positionierungen und/oder Winkeleinstellungen des ersten Scannspiegels 35 und des zweiten Scannspiegels 36 können beispielsweise durch entsprechende Galvanometer eingestellt werden, um das Laserlicht in Richtung auf einen Zielpunkt des Bauvolumens abzulenken, und um das Licht der Lichtreferenzmarkierungen 22, das in die Laservorrichtung eintritt, durch das wellenlängenselektive optische Element 38 in Richtung der Detektionseinrichtung abzulenken.

Das Laserlicht wird in der Figur von einem von der Laserlichtquelle 33 nach unten zeigenden Pfeil signalisiert. Wie in der Figur gezeigt, überlappen sich der Lichtpfad des Laserlichts und der Lichtpfad des Lichts, das von der Detektionseinrichtung 34 erfasst wird, links von dem optischen Element 38. Die Detektionseinrichtung 34 umfasst in der gezeigten Ausführungsform eine Kamera 39 und ein Objektiv 37, das für die Erfassung der Lichtreferenzmarkierungen und der Referenzmarkierungen besonders konfiguriert ist und eine Autofokussierlinse umfassen kann, die dazu eingerichtet sein kann, die Lichterfassung durch die Detektionseinrichtung 34 scharfzustellen. Die Kamera 39 kann eine monochromatische Kamera sein.

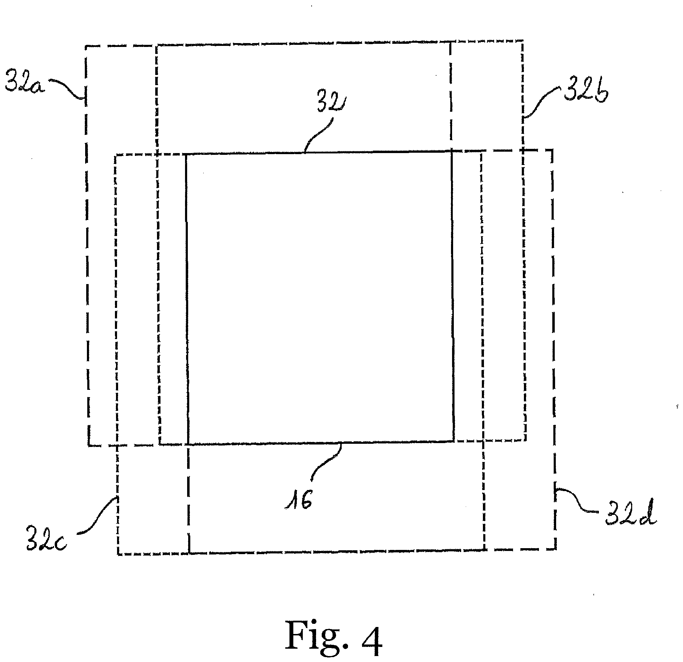

Die Fig. 4 zeigt eine schematische Darstellung der Arbeitsfelder von vier Laservorrichtungen 30 einer Anordnung gemäß einer Ausführungsform der Erfindung. Jede der Laservorrichtungen 30 der Anordnung der in der Fig. 1 oder 2 gezeigten Ausführungsform ist zur Laserbearbeitung eines zugehörigen quadratischen Arbeitsfeldes eingerichtet. Erste bis vierte Laservorrichtungen 30 sind jeweils zur Laserbearbeitung eines ersten bis vierten Arbeitsfeldes 32a-32d eingerichtet. Jedes der Arbeitsfelder 32a-32d deckt in der gezeigten Ausführungsform eine Fläche von 608 mm x 608 mm ab. Die Mittelpunkte von benachbarten Arbeitsfeldern sind in der gezeigten Ausführungsform um 202,63 mm versetzt.

Die vier Arbeitsfelder 32a-32d weisen eine gemeinsame Überlappungsfläche 32 auf, die in der gezeigten Ausführungsform mit dem Baufeld 16 deckungsgleich ist. Mit anderen Worten bildet die quadratische Überlappungsfläche 32 das quadratische Baufeld 16. Das Baufeld 16 deckt in der gezeigten Ausführungsform eine Fläche von etwa 402 mm x 402 mm ab. Die vier Laservorrichtungen 30 sind zur gleichzeitigen parallelen Laserbearbeitung des Baufeldes 16 eingerichtet. Die Markervorrichtungen 20 könnten in der gezeigten Ausführungsform dazu eingerichtet sein, ihre zugehörigen Lichtreferenzmarkierungen 22 jeweils auf eine Außenrandlinie des Baufeldes 16 zu projizieren. Die vier Markervorrichtungen 20 der in den Fig. 1 und 2 gezeigten Ausführungsformen können beispielsweise dazu eingerichtet sein, jeweils eine der Lichtreferenzmarkierungen 22 auf eine der Ecken des quadratischen Baufeldes 16 zu projizieren.

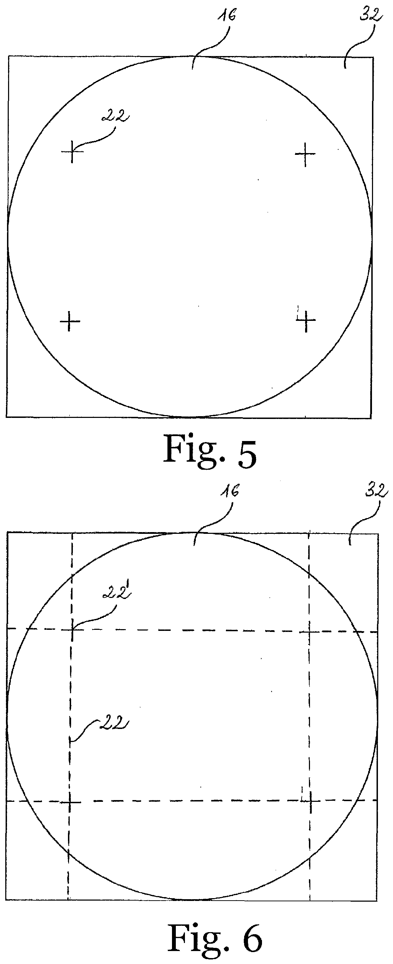

Die Figur 5 zeigt eine beispielhafte Verteilung der Lichtreferenzmarkierungen 22 auf einem kreisförmigen Baufeld 16 gemäß einer anderen Ausführungsform der Erfindung. In der gezeigten Ausführungsform kann eine quadratische Überlappungsfläche 32 von vier Laservorrichtungen 30 gesehen werden, die das kreisförmige Baufeld 16 umfasst jedoch mit diesem nicht komplett deckungsgleich ist.

Die Figur 6 zeigt eine alternative Ausführungsform, in der statt vier kreuzförmigen Lichtreferenzmarkierungen, wie in der Fig. 5, vier Laserlinien 22 projiziert werden, die sich paarweise an vier Kreuzungspunkten 22' kreuzen. Die Laserlinien 22 können jeweils von einer Linienlaserlichtquelle erzeugt werden. Die vier von den Markervorrichtungen projizierten Laserlinien 22 stehen paarweise senkrecht bzw. parallel zueinander und bilden, wie dargestellt, ein Lasermarkierungs-Viereck, dessen Eckpunkten den Kreuzungspunkten 22' entsprechen. Die Kreuzungspunkte 22' können zur Kalibrierung und/oder zur Synchronisierung erfasst werden. Die Erfassung der Kreuzungspunkte 22' der Laserlinien 22 stellt einen Spezialfall der eingangs genannten Erfassung der Lichtreferenzmarkierungen dar. Dabei versteht es sich, dass die Laserlinien 22 nicht über ihre ganze Länge, sondern nur im Bereich der Kreuzungspunkte 22' erfasst zu werden brauchen.

Es ist für den Fachmann ersichtlich, dass die Ausführungsformen der Fig. 5 und 6 kombiniert werden können, so dass beispielsweise drei oder vier Kreuzungspunkte, an denen sich drei oder vier entsprechende Laserlinien kreuzen, und ferner ein oder mehrere zusätzlichen einzelnen, beispielsweise punktförmige oder förmige, Lichtreferenzmarkierungen der Kalibrierung und/oder der Synchronisierung zu Grunde gelegt werden. Es sind beliebige Kombinationen von punktförmigen bzw. kreuzförmige und Kreuzungspunkten möglich, solange mindestens drei der ersterer oder mindestens drei letzterer vorhanden sind.

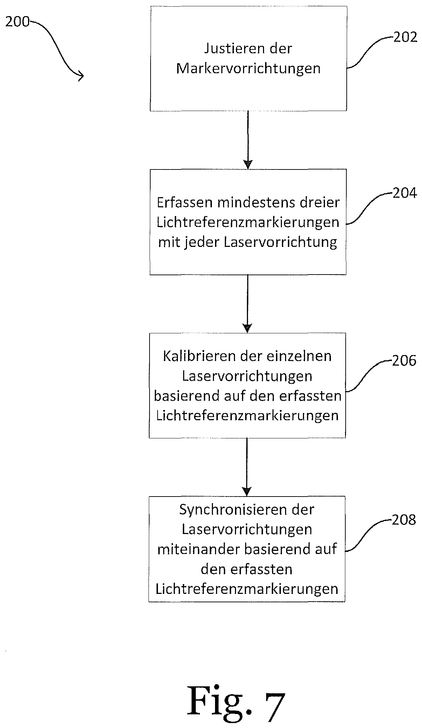

Die Fig. 7 zeigt ein Flussdiagramm, das ein Verfahren 200 zum Kalibrieren und Synchronisieren der Laservorrichtungen einer Anordnung gemäß einer Ausführungsform der Erfindung illustriert. Das Verfahren 200 kann auf eine Anordnung gemäß einer beliebigen Ausführungsform der Erfindung angewendet werden. Das Verfahren wird hierin beispielhaft in Bezug auf die in den Fig. 1 und 2 gezeigten Ausführungsformen beschrieben.

Das Verfahren 200 umfasst einen Schritt 202, in dem die Markervorrichtungen 20 so justiert werden, dass die zugehörige Lichtreferenzmarkierung 22 mit jeweils einer der Referenzmarkierungen 17 bzw. 52 in Deckung gebracht wird.

Das Verfahren 200 umfasst einen Schritt 204, in dem jede der Laservorrichtungen 30 mindestens drei der von den Markervorrichtungen 20 projizierten Lichtreferenzmarkierungen 22 erfasst.

Das Verfahren 200 umfasst ferner einen Schritt 206, in dem die einzelnen Laservorrichtungen 30 basierend auf den erfassten Lichtreferenzmarkierungen 22 kalibriert werden. Das kalibrieren umfasst insbesondere die Korrektur eines Offsets und die Kompensation eines Gain-Drifts, mit denen eine Ablenkeinheit (die in den Figuren nicht gezeigt wird) der zugehörigen Laservorrichtung 30 behaftet sein kann. In der gezeigten Ausführungsform erfolgt die Kalibrierung anhand einer Auswahl unter den Lichtreferenzmarkierungen 22. Bei dieser Auswahl werden die Lichtreferenzmarkierungen 22 bevorzugt, die weiter von einem Mittelpunkt des Arbeitsfeldes der zugehörigen Laservorrichtung entfernt sind.

Dies kann man anhand der Figur 4 besser verstehen. Eine erste Laservorrichtung 30, die zur Laserbearbeitung des Arbeitsfeldes 32a eingerichtet ist, kann beispielsweise anhand der drei Lichtreferenzmarkierungen 22 kalibriert werden, die weiter entfernt von dem Mittelpunkt des Arbeitsfeldes 32a liegen als die diesem Mittelpunkt nächstliegende Lichtreferenzmarkierung. Wenn die vier Markervorrichtungen 20 der in den Fig. 1 und 2 gezeigten Ausführungsformen beispielsweise, jeweils eine der Lichtreferenzmarkierungen 22 auf eine der Ecken des quadratischen Baufeldes 16 projizieren, liegt die vorgenannte nächstliegende Lichtreferenzmarkierungen auf der oberen linken Ecke des quadratischen Baufeldes 16. Die erste Laservorrichtung kann dann bei dem Verfahrensschritt 206 anhand der anderen drei Lichtreferenzmarkierungen 22 kalibriert werden, nämlich der Lichtreferenzmarkierungen oben rechts, unten links und unten rechts.

Das Verfahren 200 umfasst ferner einen Schritt 208, in dem die vier Laservorrichtungen 30 der Anordnung basierend auf den erfassten Lichtreferenzmarkierungen miteinander synchronisiert werden. Dieser Schritt 208 kann für Anordnungen entfallen, die gemäß manchen der oben erläuterten Ausführungsformen der Erfindung nur eine Laservorrichtung 30 umfassen.

Die Verfahrensschritte 206 bis 208 können in einer beliebigen Reihenfolge ausgeführt werden, die nicht unbedingt mit der in der Figur 7 dargestellten Reihenfolge übereinstimmen muss. Zudem kann das Verfahren 200 eine Wiederholung aller Verfahren Schritte in regelmäßigen Intervallen umfassen.

### BEZUGSZEICHENVERZEICHNIS

- 10: Anordnung
- 12: Gehäuse
- 14: Bauvolumen
- 16: Baufeld
- 18: Deckelelement
- 19: Lichtdurchlässiger Teil des Deckelelements
- 20: Markervorrichtungen
- 22: Lichtreferenzmarkierungen
- 22': Kreuzungspunkte der Lichtreferenzmarkierungen
- 30: Laservorrichtung
- 32: Überlappungsfläche der Arbeitsfelder
- 32a-32d: Arbeitsfelder
- 33: Laserlichtquelle
- 34: Detektionseinrichtung
- 35: Erster Scannspiegel
- 36: Zweiter Scannspiegel
- 37: Objektiv
- 38: wellenlängenselektives optisches Element
- 39: Kamera
- 40: Steuereinheit
- 50: Referenzmarkierplatte
- 52: Referenzmarkierungen
- 100: Bauteil
- 102: Bewegliches Halteelement

- 200: Verfahren
- 202-208: Verfahrensschritte

## Patentansprüche

1. Anordnung (10) zur pulverbett-basierten additiven Fertigung eines Bauteils (100), wobei die Anordnung (10) folgendes umfasst:
ein Gehäuse (12), das ein Bauvolumen (14) umfasst, wobei das Bauvolumen (14) ein Baufeld (16) umfasst;
mindestens drei Markervorrichtungen (20), die in oder an dem Gehäuse (12) befestigt sind, wobei jede Markervorrichtung (20) eine Laserlichtquelle (33) umfasst, die dazu eingerichtet ist, eine punktförmige oder kreuzförmige Lichtreferenzmarkierung (22) auf ein auf dem Baufeld (16) liegendes Bauteil (100) und/oder auf das Baufeld (16) zu projizieren;
eine Laservorrichtung (30) zur Laserbearbeitung eines Pulverbetts zur Erzeugung eines Bauteils (100) auf dem Baufeld (16) mittels additiver Fertigung, wobei die Laservorrichtung (30) zur Laserbearbeitung eines zugehörigen Arbeitsfeldes (32a-32d) eingerichtet ist, wobei die Laservorrichtung (30) eine Detektionseinrichtung (34) umfasst, die dazu eingerichtet ist, die mindestens drei Lichtreferenzmarkierungen (22) zu erfassen; und
eine Steuereinheit (40), die dazu eingerichtet ist, basierend auf den mindestens drei von der Detektionseinrichtung (34) erfassten punktförmigen oder kreuzförmigen Lichtreferenzmarkierungen (22) die Laservorrichtung (30) zu kalibrieren.

2. Anordnung (10) zur pulverbett-basierten additiven Fertigung eines Bauteils (100), wobei die Anordnung (10) folgendes umfasst:
ein Gehäuse (12), das ein Bauvolumen (14) umfasst, wobei das Bauvolumen (14) ein Baufeld (16) umfasst;
mindestens drei Markervorrichtungen (20), die in oder an dem Gehäuse (12) befestigt sind, wobei jede Markervorrichtung (20) dazu geeignet ist, eine linienförmige Lichtreferenzmarkierung (22) auf ein auf dem Baufeld (16) liegendes Bauteil (100) und/oder auf das Baufeld (16) zu projizieren, wobei die linienförmigen Lichtreferenzmarkierungen (22) sich paarweise an mindestens drei zugehörigen Kreuzungspunkten (22') kreuzen;
eine Laservorrichtung (30) zur Laserbearbeitung eines Pulverbetts zur Erzeugung eines Bauteils (100) auf dem Baufeld (16) mittels additiver Fertigung, wobei die Laservorrichtung (30) zur Laserbearbeitung eines zugehörigen Arbeitsfeldes (32a-32d) eingerichtet ist, wobei die Laservorrichtung (30) eine Detektionseinrichtung (34) umfasst, die dazu eingerichtet ist, die mindestens drei Kreuzungspunkte (22') zu erfassen; und
eine Steuereinheit (40), die dazu eingerichtet ist, basierend auf den mindestens drei von der Detektionseinrichtung (34) erfassten Kreuzungspunkten (22') die Laservorrichtung (30) zu kalibrieren.

3. Anordnung (10) nach Anspruch 1 oder 2, wobei die Anordnung eine Mehrzahl von Laservorrichtungen (30) umfasst, wobei jede Laservorrichtung (30) zur Laserbearbeitung eines zugehörigen Arbeitsfeldes (32a-32d) eingerichtet ist, wobei die Arbeitsfelder eine gemeinsame Überlappungsfläche (32) abdecken, die dem Baufeld (16) entspricht oder das Baufeld (16) umfasst, wobei die Mehrzahl von Laservorrichtungen (30) zur gleichzeitigen parallelen Laserbearbeitung des Baufeldes (16) eingerichtet sind, wobei jede Laservorrichtung (30) eine Detektionseinrichtung (34) umfasst, die dazu eingerichtet ist, die Lichtreferenzmarkierungen (22) und/oder die Kreuzungspunkte (22') zu erfassen; und
wobei die Steuereinheit (40) dazu eingerichtet ist, basierend auf den von den Detektionseinrichtungen (34) erfassten Lichtreferenzmarkierungen (22) und/oder Kreuzungspunkten (22') die Mehrzahl von Laservorrichtungen (30) zu kalibrieren und/oder verschiedene Laservorrichtungen (30) miteinander zu synchronisieren.

4. Anordnung (10) nach einem der vorhergehenden Ansprüche, die ferner ein Deckelement (18) umfasst, das dazu geeignet ist, das Gehäuse (12) abzudecken, wobei die mindestens drei Markervorrichtungen (20) vorzugsweise in oder an dem Deckelelement (18) befestigt sind; und/oder
wobei die mindestens drei Markervorrichtungen (20) außerhalb des Gehäuses (12) angeordnet sind.

5. Anordnung (10) nach einem der vorhergehenden Ansprüche, wobei die Mehrzahl von Laservorrichtungen (30) mindestens vier Laservorrichtungen (30) umfasst, die jeweils dazu geeignet sind, das gesamte Baufeld (16) zur Herstellung des Bauteils (100) parallel zu bearbeiten.

6. Anordnung (10) nach einem der vorhergehenden Ansprüche, wobei das Baufeld (16) eine oder mehrere Referenzmarkierungen (17) aufweist, und wobei die Detektionseinrichtung (34) mindestens einer der Laservorrichtungen (30) ferner dazu eingerichtet ist, die eine oder die mehreren Referenzmarkierungen (17) zu erfassen;
wobei die Anordnung (10) vorzugsweise ferner eine abnehmbare Referenzmarkierplatte (50) umfasst, die im oder auf dem Baufeld (16) angeordnet werden kann und die die eine oder mehreren Referenzmarkierungen (52) umfasst.

7. Anordnung (10) nach einem der vorhergehenden Ansprüche, wobei mindestens eine der Markervorrichtungen (20) dazu eingerichtet ist, Laserlicht zur Erzeugung der Lichtreferenzmarkierung (22) zu erzeugen, das eine oder mehrere Wellenlängen zwischen 405 nm und 850 nm, vorzugweise zwischen 490 nm und 640 nm, besonders bevorzugt zwischen 490 nm und 540 nm aufweist.

8. Anordnung (10) nach einem der vorhergehenden Ansprüche, wobei eine oder mehrere der Markervorrichtungen (20) dazu eingerichtet sind, die zugehörige Lichtreferenzmarkierung (22) auf eine Außenrandlinie des Baufeldes (16) zu projizieren, oder in einem Abstand von der Außenrandlinie, der 10 % des Durchmessers des Baufeldes nicht übersteigt.

9. Anordnung (10) nach einem der vorhergehenden Ansprüche, wobei die Laservorrichtung (30) bzw. mindestens eine der Laservorrichtungen (30) folgendes umfasst:
eine Laserlichtquelle (33), die dazu eingerichtet ist, Laserlicht zur Laserverarbeitung eines Bauteils (100) zu erzeugen;
eine Ablenkeinheit, die dazu eingerichtet ist, Licht abzulenken und zu scannen; und
ein wellenlängenselektives optisches Element (38), das zwischen der Ablenkeinheit und der Laserlichtquelle (33) angeordnet ist, und das für eine oder mehrere Wellenlängen des Laserlichts zumindest teilweise reflektierend ist und für eine oder mehrere Wellenlängen der Lichtreferenzmarkierungen (22) zumindest teilweise durchlässig ist oder umgekehrt;
wobei das wellenlängenselektive optische Element (38) ferner dazu eingerichtet ist, das Licht der Lichtreferenzmarkierungen (22) auszukoppeln und auf die Detektionseinrichtung (34) zu richten.

10. Verfahren zum Kalibrieren und/oder Synchronisieren der Laservorrichtung (30) bzw.
der Mehrzahl von Laservorrichtungen (30) einer Anordnung (10) zur pulverbett-basierten additiven Fertigung gemäß einem der vorhergehenden Ansprüche, wobei das Verfahren folgendes umfasst:
Erfassen mindestens dreier Lichtreferenzmarkierungen (22) mit der Laservorrichtung (30) bzw. einer jeden der Laservorrichtungen (30); und
Kalibrieren der Laservorrichtung (30) bzw. der einzelnen Laservorrichtungen (30) und/oder Synchronisieren der Mehrzahl von Laservorrichtungen (30) miteinander basierend auf den erfassten Lichtreferenzmarkierungen (22).

11. Verfahren nach Anspruch 10, wobei mindestens drei der Lichtreferenzmarkierungen (22) linienförmig sind, wobei die linienförmigen Lichtreferenzmarkierungen (22) sich paarweise an mindestens drei zugehörigen Kreuzungspunkten (22') kreuzen, und wobei das Erfassen der Lichtreferenzmarkierungen (22) das Erfassen der mindestens drei Kreuzungspunkte (22') umfasst oder darin besteht; und
wobei das Kalibrieren der Laservorrichtung (30) bzw. der einzelnen Laservorrichtungen (30) und/oder das Synchronisieren der Mehrzahl von Laservorrichtungen (30) miteinander auf den mindestens drei erfassten Kreuzungspunkt (22') basiert.

12. Verfahren nach Anspruch 10 oder 11, wobei jede der Laservorrichtungen (30) eine Ablenkeinheit umfasst, mit der ein von der zugehörigen Laservorrichtung (30) erzeugter Laserstrahl zum Abscannen des Baufeldes (16) abgelenkt werden kann, und bei dem die Kalibrierung die Korrektur eines Offsets und/oder die Kompensation eines Gain-Drifts der Ablenkeinheit umfasst.

13. Verfahren nach einem der Ansprüche 10 bis 12, das ferner einen Schritt umfasst, in dem eine jede der Markervorrichtungen (20) derart justiert wird, dass die zugehörige Lichtreferenzmarkierung (22) eine vorbestimmte räumliche Beziehung zu einer oder mehreren der Referenzmarkierungen (17; 52) annimmt, und insbesondere mit einer der Referenzmarkierungen (17; 52) in Deckung gebracht wird; und/oder
wobei die Kalibrierung mindestens einer der Laservorrichtungen (30) auf einer Auswahl unter den Lichtreferenzmarkierungen (22) und/oder den Kreuzungspunkten (22') basiert, in der Lichtreferenzmarkierungen (22) und/oder Kreuzungspunkte (22') bevorzugt sind, die weiter von einem Mittelpunkt des Arbeitsfeldes der zugehörigen Laservorrichtung (30) entfernt sind; und/oder
wobei das Kalibrieren der einzelnen Laservorrichtungen (30) und/oder Synchronisieren der Mehrzahl von Laservorrichtungen (30) im Laufe der additiven Fertigung wiederholt wird, vorzugsweise in regelmäßigen Intervallen.

14. Computerprogrammprodukt, umfassend Befehle, die bei der Ausführung des Programms durch einen Prozessor, der mit einer Anordnung nach einem der Ansprüche 1 bis 9 assoziiert ist, diese veranlassen, das Verfahren nach einem der Ansprüche 10 bis 13 auszuführen.

15. Computerlesbares Speichermedium, das ein Computerprogrammprodukt nach Anspruch 14 speichert.

## Claims

1. A system (10) for powder-bed-based additive manufacturing a workpiece (100), the system (10) comprising:
a housing (12) comprising a work volume (14), wherein the work volume (14) comprises a work field (16);
at least three marking devices (20) fixed within or on the housing (12), wherein each marking device (20) comprises a laser light source (33) configured for projecting a point-shaped or cross-shaped light reference mark (22) onto a workpiece (100) arranged on the work field (16) and/or onto the work field (16);
a laser device (30) for laser processing a powder bed for generating a workpiece (100) on the work field (16) by means of additive manufacturing, wherein the laser device (30) is configured for laser processing an associated work field (32a-32d), wherein the laser device (30) comprises a detection device (34) configured for detecting the at least three light reference marks (22); and
a control unit (40) configured for calibrating the laser device (30) based on the at least three point-shaped or cross-shape light reference marks (22) detected by the detection device (34).

2. A system (10) for powder-bed-based additive manufacturing a workpiece (100), the system (10) comprising:
a housing (12) comprising a work volume (14), wherein the work volume (14) comprises a work field (16);
at least three marking devices (20) fixed within or on the housing (12), wherein each marking device (20) comprises a laser light source (33) configured for projecting a line-shaped light reference mark (22) onto a workpiece (100) arranged on the work field (16) and/or onto the work field (16), wherein the line-shaped light reference marks (22) intersect pairwise at at least three corresponding intersection point (22');
a laser device (30) for laser processing a powder bed for generating a workpiece (100) on the work field (16) by means of additive manufacturing, wherein the laser device (30) is configured for laser processing an associated work field (32a-32d), wherein the laser device (30) comprises a detection device (34) configured for detecting the at least three intersection points (22'); and
a control unit (40) configured for calibrating the laser device (30) based on the at least three intersection points (22') detected by the detection device (34).

3. The system (10) of claim 1 or 2, comprising a plurality of laser devices (30), wherein each laser device (30) is configured for laser processing an associated work field (32a-32d), wherein the work fields cover a common overlap field (32) which corresponds to the work field (16) or comprises the work field (16), wherein the plurality of laser devices (30) are configured for parallel laser processing the work field (16) simultaneously, wherein each laser device (30) comprises a detection device (34) configured for detecting the light reference marks (22) and/or intersection points (22'); and
wherein the control unit (40) is configured for calibrating the plurality of laser devices (30) and/or for synchronizing different laser devices (30) with each other, based on the light reference marks (22) and/or the intersection points (22') detected by the detection devices (34).

4. The system (10) of any of the preceding claims, further comprising a cover element (18) suitable for covering the housing (12), wherein the at least three marking devices (20) are preferably fixed in or onto the cover element (18); and/or
wherein the at least three marking devices (20) are arranged outside of the housing (12).

5. The system (10) of any of the preceding claims, wherein the plurality of laser devices (30) comprises at least four laser devices (30), each of which is suitable for processing the entire work field (16) in parallel for manufacturing the workpiece (100).

6. The system (10) of any of the preceding claims, wherein the work field (16) has one or more reference marks (17), and wherein the detection device (34) of at least one of the laser devices (30) is further configured for detecting the one or more reference marks (17);
wherein the system (10) preferably further comprises a removable reference mark plate (50) that can be arranged in or on the work field (16), wherein the removable reference mark plate (50) comprises the one or more reference marks (52).

7. The system (10) of any of the preceding claims, wherein at least one of the marking devices (20) is configured for generating laser light for generating the light reference mark (22), said laser light having one or more wavelengths between 405 nm and 850 nm, preferably between 490 nm and 640 nm and particularly preferably between 490 nm and 540 nm.

8. The system (10) of any of the preceding claims, wherein one or more of the marking devices (20) are configured for projecting the corresponding light reference mark (22) onto an outer perimeter of the work field (16), or at a distance from the outer perimeter which does not exceed 10% of the dimension of the work field.

9. The system (10) of any of the preceding claims, wherein the laser device (30) and/or at least one of the laser devices (30) comprises:
a laser light source (33) configured for generating laser light for laser processing a workpiece (100);
a deflection unit configured for deflecting and scanning light; and a wavelength-selective optical element (38) arranged between the deflection unit and the laser light source (33), wherein the wavelength-selective optical element (38) is at least partially reflecting for one or more wavelengths of the laser light and at least partially transparent for one or more wavelengths of the light reference marks (22), or vice versa;
wherein the wavelength-selective optical element (38) is further configured for decoupling the light of the light reference marks (22) and direct it at the detection device (34).

10. A method for calibrating and/or synchronizing the laser device (30) or the plurality of laser devices (30) of a system (10) for powder bed-based additive manufacturing in accordance with one of the preceding claims, the method comprising:
detecting at least three light reference marks (22) with the laser device (30) or with each of the laser devices (30); and
calibrating the laser device (30) or each of the laser devices (30) and/or synchronizing the plurality of laser devices (30) with each other based on the detected light reference marks (22).

11. The method of claim 10, wherein at least three of the light reference marks (22) are line-shaped, wherein the line-shaped light reference marks (22) intersect pairwise at at least three corresponding intersection points (22'), and wherein the detection of the light reference marks (22) comprises or consists of the detection of at the least three intersection points (22'); and
wherein the calibrating the laser device (30) or each of the laser devices (30) and/or the synchronizing the plurality of laser devices (30) with each other is based on the at least three detected intersection points (22').

12. The method of claim 10 or 11, wherein each of the laser devices (30) comprises a deflection unit, wherein a laser beam generated by the associated laser device (30) can be deflected with the deflection unit to scan the work field (16), and wherein the calibration comprises the correction of an offset and/or the compensation of a gain drift of the deflection unit.

13. The method of any of claims 12 to 14, further comprising a step in which each of the marking devices (20) is adjusted in such a way that the corresponding light reference mark (22) takes a predetermined spatial relationship with respect to one or more of the reference marks (17; 52), in particular being brought into overlap with one of the reference marks (17; 52); and/or
wherein the calibration of at least one of the laser devices (30) is based on a selection among the light reference marks (22) and/or the intersection points (22'), in which light reference marks (22) and/or intersection points (22') that are further away from a centre of the work field of the corresponding laser device (30) are preferred; and/or
wherein the calibrating each of the laser devices (30) and/or the synchronizing the plurality of laser devices (30) is repeated in the course of the additive manufacturing, preferably at regular intervals.

14. A computer program product comprising commands which, when the program is executed by a processor associated with a system according to any of claims 1 to 9, cause said processor to carry out the method according to any of claims 10 to 13.

15. A computer-readable storage medium storing a computer program product according to claim 14.

## Revendications

1. Agencement (10) pour la fabrication additive à base de lit de poudre d'un composant (100), dans lequel l'agencement (10) comprend :
un boîtier (12), qui comprend un volume de construction (14), dans lequel le volume de construction (14) comprend un champ de construction (16) ;
au moins trois dispositifs de marquage (20), qui sont fixés dans ou sur un boîtier (12), dans lequel chaque dispositif de marquage (20) comprend une source de lumière laser (33), qui est conçue pour projeter une marque de référence lumineuse (22) ponctuelle ou cruciforme sur un composant (100) situé sur le champ de construction (16) et/ou sur le champ de construction (16) ;
un dispositif laser (30) pour le traitement au laser d'un lit de poudre pour la production d'un composant (100) sur le champ de construction (16) au moyen d'une fabrication additive, dans lequel le dispositif laser (30) est conçu pour le traitement au laser d'un champ de travail (32a-32d) associé, dans lequel le dispositif laser (30) comprend une installation de détection (34), qui est conçue pour détecter au moins trois marques de référence lumineuse (22) ; et
une unité de commande (40), qui est conçue pour étalonner le dispositif laser (30) sur la base des au moins trois marques de référence lumineuse (22) ponctuelles ou cruciformes détectées par l'installation de détection (34).

2. Agencement (10) pour la fabrication additive à base de lit de poudre d'un composant (100), dans lequel l'agencement (10) comprend :
un boîtier (12), qui comprend un volume de construction (14), dans lequel le volume de construction (14) comprend un champ de construction (16) ;
au moins trois dispositifs de marquage (20), qui sont fixés dans ou sur un boîtier (12), dans lequel chaque dispositif de marquage (20) est conçu pour projeter une marque de référence lumineuse (22) linéaire sur un composant (100) situé sur le champ de construction (16) et/ou sur le champ de construction (16), dans lequel les marques de référence lumineuse (22) linéaires se croisent par paires en au moins trois points de croisement (22') associés ;
un dispositif laser (30) pour le traitement au laser d'un lit de poudre pour la production d'un composant (100) sur le champ de construction (16) au moyen d'une fabrication additive, dans lequel le dispositif laser (30) est conçu pour le traitement au laser d'un champ de travail (32a-32d) associé, dans lequel le dispositif laser (30) comprend une installation de détection (34), qui est conçue pour détecter au moins trois points de croisement (22') ; et
une unité de commande (40), qui est conçue pour étalonner le dispositif laser (30) sur la base des au moins trois points de croisement (22') détectés par l'installation de détection (34).

3. Agencement (10) selon la revendication 1 ou 2, dans lequel l'agencement comprend une pluralité de dispositifs laser (30), dans lequel chaque dispositif laser (30) est conçu pour le traitement au laser d'un champ de travail (32a-32d) associé, dans lequel le champ de travail recouvre une surface de chevauchement (32) commune, qui correspond au champ de construction (16) ou qui comprend le champ de construction (16), dans lequel la pluralité de dispositifs laser (30) sont conçus pour le traitement au laser simultané parallèle des champs de construction (16), dans lequel chaque dispositif laser (30) comprend une installation de détection (34), qui est conçue pour détecter les marquages de référence lumineuse (22) et/ou les points de croisement (22') ; et
dans lequel l'unité de commande (40) est conçue pour étalonner la pluralité de dispositifs laser (30) et/ou pour synchroniser différents dispositifs laser (30) les uns avec les autres sur la base des marquages de référence lumineuse (22) et/ou des points de croisement (22') détectés par l'installation de détection (34).

4. Agencement (10) selon l'une des revendications précédentes, qui comprend en outre un élément de recouvrement (18), qui est conçu pour recouvrir le boîtier (12), dans lequel les au moins trois dispositifs de marquage (20) sont fixés de préférence dans ou sur un élément de recouvrement (18) ; et/ou
dans lequel les au moins trois dispositifs de marquage (20) sont disposés à l'extérieur du boîtier (12).

5. Agencement (10) selon l'une des revendications précédentes, dans lequel la pluralité de dispositifs laser (30) comprend au moins quatre dispositifs laser (30), qui sont conçus respectivement pour usiner en parallèle le même champ de construction (16) pour la fabrication du composant (100).

6. Agencement (10) selon l'une des revendications précédentes, dans lequel le champ de construction (16) présente un ou plusieurs marquages de référence (17), et dans lequel l'installation de détection (34) comprend en outre au moins un des dispositifs laser (30) qui est conçu pour détecter un ou plusieurs marquages de référence (17) ;
dans lequel l'agencement (10) comprend en outre de préférence une plaque de marquage de référence amovible (50), qui peut être disposée dans ou sur le champ de construction (16) et qui comprend un ou plusieurs marquages de référence (52).

7. Agencement (10) selon l'une des revendications précédentes, dans lequel au moins un des dispositifs de marquage (20) est conçu pour produire une lumière laser pour la production du marquage de référence lumineuse (22), qui présente une ou plusieurs longueurs d'onde entre 405 nm et 850 nm, de préférence entre 490 nm et 640 nm, de manière particulièrement préférée entre 490 nm et 540 nm.

8. Agencement (10) selon l'une des revendications précédentes, dans lequel un ou plusieurs des dispositifs de marquage (20) sont conçus pour projeter le marquage de référence lumineuse (22) correspondant sur une ligne de bord du champ de construction (16), ou à une distance de la ligne de bord, qui ne dépasse pas 10 % des diamètres du champ de construction.

9. Agencement (10) selon l'une des revendications précédentes, dans lequel le dispositif laser (30) ou au moins un des dispositifs laser (30) comprend :
une source de lumière laser (33), qui est conçue pour produire une lumière laser pour le traitement laser d'un composant (100) ;
une unité de déviation, qui est conçue pour dévier la lumière et la balayer ; et
un élément optique sélectif en longueur d'onde (38), qui est disposé entre l'unité de déviation et la source de lumière laser (33), et qui est au moins partiellement réfléchissant pour une ou plusieurs longueurs d'onde de la lumière laser et au moins partiellement transparent pour une ou plusieurs longueurs d'onde du marquage de référence lumineuse (22) ou inversement ;
dans lequel l'élément optique sélectif en longueur d'onde (38) est en outre conçu pour dévier la lumière du marquage de référence lumineuse (22) et la diriger sur le dispositif de détection (34).

10. Procédé pour étalonner et/ou synchroniser le dispositif laser (30) ou la pluralité de dispositifs laser (30) d'un agencement (10) pour la fabrication additive à base de lit de poudre selon l'une des revendications précédentes, dans lequel le procédé comprend :
la détection d'au moins trois marques de référence lumineuse (22) avec le dispositif laser (30) ou chacun des dispositifs laser (30) ; et
l'étalonnage du dispositif laser (30) ou des dispositifs laser individuels (30) et/ou la synchronisation de la pluralité de dispositifs laser (30) les uns avec les autres sur la base des marquages de référence lumineuse (22) détectés.

11. Procédé selon la revendication 10, dans lequel au moins trois des marques de référence lumineuse (22) sont linéaires, dans lequel les marques de référence lumineuse (22) linéaires se croisent par paires en au moins trois points de croisement (22') associés, et dans lequel la détection des marques de référence lumineuse (22) comprend ou consiste en la détection des au moins trois points de croisement (22') ; et
dans lequel l'étalonnage du dispositif laser (30) ou des dispositifs laser individuels (30) et/ou la synchronisation de la pluralité de dispositifs laser (30) les uns avec les autres sont basés sur les au moins trois points de croisement (22') détectés.

12. Procédé selon la revendication 10 ou 11, dans lequel chacun des dispositifs laser (30) comprend une unité de déviation, avec laquelle un faisceau laser généré par le dispositif laser (30) associé peut être dévié pour balayer le champ de construction (16), et dans lequel l'étalonnage comprend la correction d'un décalage et/ou la compensation d'un gain-dérive de l'unité de déviation.

13. Procédé selon l'une des revendications 10 à 12, qui comprend en outre une étape, dans laquelle chacun des dispositifs de marquage (20) est ajusté de telle sorte que la marque de référence lumineuse (22) associée adopte une relation spatiale prédéterminée par rapport à une ou plusieurs des marques de référence (17 ; 52), et en particulier avec une des marques de référence (17 ; 52) est mise en correspondance ; et/ou
dans lequel l'étalonnage d'au moins un des dispositifs laser (30) est basé sur une sélection parmi les marques de référence lumineuse (22) et/ou les points de croisement (22'), de préférence dans les marques de référence lumineuse (22) et/ou les points de croisement (22'), qui sont en outre éloignés d'un centre des champs de travail du dispositif laser (30) associé ; et/ou
dans lequel l'étalonnage des dispositifs laser individuels (30) et/ou la synchronisation de la pluralité de dispositifs laser (30) est répété au cours de la fabrication additive, de préférence à intervalles réguliers.

14. Produit de programme informatique, comprenant des instructions, qui lors de l'exécution des programmes par un processeur, qui est associé à un agencement selon l'une des revendications 1 à 9, amènent celui-ci à exécuter le procédé selon l'une des revendications 10 à 13.

15. Support de stockage lisible par ordinateur, qui stocke un produit de programme informatique selon la revendication 14.
